Europäisches Patentamt

European Patent Office

Office européen des brevets

(11) Publication number: **0 175 298**
**A2**

## (12) EUROPEAN PATENT APPLICATION

(21) Application number: **85111595.6**

(22) Date of filing: **13.09.85**

(51) Int. Cl.⁴: **G01V 11/00 , E21B 47/024**

(30) Priority: **14.09.84 US 650712**

(43) Date of publication of application:
**26.03.86 Bulletin 86/13**

(84) Designated Contracting States:
**DE FR GB NL**

(71) Applicant: **Develco, Incorporated**
**404 Tasman Drive**
**Sunnyvale California 94086(US)**

(72) Inventor: **Fraser, Edward Cleveland**
**19928 Twilight Court**
**Cupertino California 95014(US)**
Inventor: **Marsh, John Lowry**
**7636 Elderwood Court**
**Cupertino California 95014(US)**
Inventor: **Rorden, Louis Harold**
**1414 Miravelle**
**Los Altos California 94022(US)**

(74) Representative: **UEXKÜLL & STOLBERG Paten-**
**tanwälte**
**Beselerstrasse 4**
**D-2000 Hamburg 52(DE)**

(54) **Borehole sensing tool with optical rotation sensor.**

(57) A tool (50) for measuring the direction of a subterranean borehole (200) includes an optical rotation sensing device (52) which accurately measures attitude of the tool housing (51). The optical rotation sensor (52) includes two optical fiber coils (74, 76) configured in the shape of a race track. The optical fiber coils (74, 76) are fixedly disposed on a frame (78) and positioned such that the plane of one coil (74) is rotated a predetermined angle with respect to the plane of the other coil (76). The frame (78) is periodically rotated about an axis which is axial to the borehole (200). An accelerometer (58) measures acceleration with respect to terrestrial gravitational forces. Tool attitude is calculated from the measurements performed by the optical rotation sensor (52) and the measurements produced by the accelerometer (58). A signal indicating the measured attitude is transmitted to the surface for analysis and display.

FIG. 1

## BOREHOLE SENSING TOOL WITH OPTICAL ROTATION SENSOR

### Field of the Invention

The present invention relates to a method and apparatus for geophysical exploration, and more particularly, to the sensing of the instantaneous orientation (attitude) of a tool within a well borehole.

### Background of the Invention

Accurate borehole angle measurements are required for performing surveys for directional control, especially during a steering motor run and for open-hole diplog surveys. In uncased holes, such measurements are often made by lowering a sensor package into the hole. Such sensing arrays monitor actual orientation by measuring local magnetic and gravitational fields which describe the instantaneous orientation of the sensor as it travels through the borehole. Useful information such as inclination (drift), azimuth (borehole direction), and tool face angle (rotation) can be determined in this way. It is also often useful to determine the actual attitude of a well logging apparatus lowered into a borehole to permit correlation of conductivity measurements and the like with sensor orientation.

Magnetometers and inclinometers are conventionally used to determine instantaneous orientation of a tool lowered into a borehole. Magnetometers are devices which measure the intensity of the terrestrial magnetic field in different directions with respect to the tool. Conventional 3-axis fluxgate magnetometers (i.e. magnetometers which measure magnetic field intensity in each of three, usually orthogonal directions) can be used to determine orientation of a tool with respect to the direction of the earth's magnetic field. However, magnetometers exhibit errors due to a number of different sources, the most important ones of which are the effects of roll and pitch of the tool as it is lowered into the borehole and the effects of ferromagnetic material in the tool itself. Other factors, such as magnetometer bias errors, scale factor errors, temperature effects and mounting errors, are less significant but may nevertheless lead to inaccuracy in orientation determination.

Inclinometers measure orientation with respect to the gravitational field of the earth. Typically, two-axis inclinometers (i.e. those which measure orientation with respect to two directions) are used in vertical well drilling, although 3-axis devices are needed for horizontal well applications (such as, e.g., mining and coal gasification/methane drainage). A two-axis inclinometer begins to degrade in performance as the inclinometer approaches the horizon, so that the maximum inclination angle should be limited to 70° to ensure accuracy. While the use of a third inclinometer axis ensures uniform error over all tool angles, provides some immunity to scale factor temperature shifts (which are common on all axes), and also helps to reduce errors introduced by signal processing circuits due to the effects of temperature shifts, such inclinometers still remain subject to other errors (such as those introduced by scale factor, bias, temperature and misalignment).

Calibration of the tool (i.e. measurement by the tool of known conditions) for changes in temperature permits the reduction but not the elimination of most of the errors inherent in the tool itself. Some errors produced by the tool may also be removed by geometric calibration (rotational testing in a test fixture). Unfortunately, inherent errors cannot be completely eliminated, and their influence may result in important measurement inaccuracies. Moreover, calibration is ineffective to reduce errors caused by external effects such as proximity to ferromagnetic materials.

Optical rotational sensors utilizing the Sagnac Effect to measure the rotation rate of a light path are, in general, known. The following references disclose examples of such optical rotational sensors: U.S. Patent No. 4,299,490 to Cahill et al entitled "PHASE NULLING OPTICAL GYRO" issued on November 10, 1981; U.S Patent No. 4,375,680 to Cahill et al entitled "OPTICAL ACOUSTIC SENSOR" issued March 1, 1983; U.S. Patent No. 4,372,685 to Ulrich entitled "METHOD AND ARRANGEMENT FOR THE MEASUREMENT OF ROTATIONS" issued February 8, 1983; U.S. Patent No. 4,342,517 to Johnson et al entitled "METHOD AND ARRANGEMENT FOR THE MEASUREMENT OF ROTATIONS BY THE SAGNAC EFFECT" issued on August 3, 1982; R. Cahill & E. Udd, "Phase-Nulling Fiber-Optic Laser Gyro," 4 Optics Letters No. 3, 93-95 (March 1979); Davis, J.L. and Ezekiel, S., "Techniques for Shot-Noise-Limited Inertial Rotation Measurement Using a Multiturn Fiber Sagnac Interferometer," Proceedings of the Society of Photo-Optical Instrumentation Engineers (entitled "Laser Inertial Rotation Sensors") 131-134 (1978); and Ahmed, M.J. and L. Young, "Comparatorless Electrooptic ADC", Vol. 19, No. 18, page 3050-51 of Applied Optics (September 15, 1980).

### Summary of the Invention

The present invention produces measurements of the direction of a borehole to a high degree of accuracy. A housing adapted to travel through a subterranean borehole is lowered into the borehole. An optical rotation sensor produces indicia useful in determining the attitude of the housing. A signal indicating housing attitude is transmitted to the surface.

The apparatus preferably further includes an accelerometer which produces indicia of the attitude of the housing with respect to the earth's gravitation field. The indicia of acceleration is also transmitted to the surface.

The optical rotation sensor preferably includes a fiber optics device which senses rate of rotation of the housing. The fiber optics device preferably includes a plurality of optical fiber coils. The optical fiber coils are preferably fixedly disposed on a frame in positions such that the plane of one coil is displaced a predetermined angle from the plane of another coil. The frame is selectively rotated with respect to the housing and measurements are made at different rotational positions of the frame to reduce the effects of inherent bias.

### Brief Description of the Drawings

These and other features and advantages of the present invention can be more easily understood from the following more detailed description taken in conjunction with the accompanying drawings in which:

FIGURE 1 is a block diagram of the presently preferred exemplary embodiment of a system in accordance with the present invention;

FIGURE 2 is a side view in cross-section of system 10; and

FIGURE 3 is a side view in perspective of the optical fiber light path of the optical rotation sensor rotated 90° from the position shown in FIGURE 2.

## Detailed Description of the Preferred Embodiment

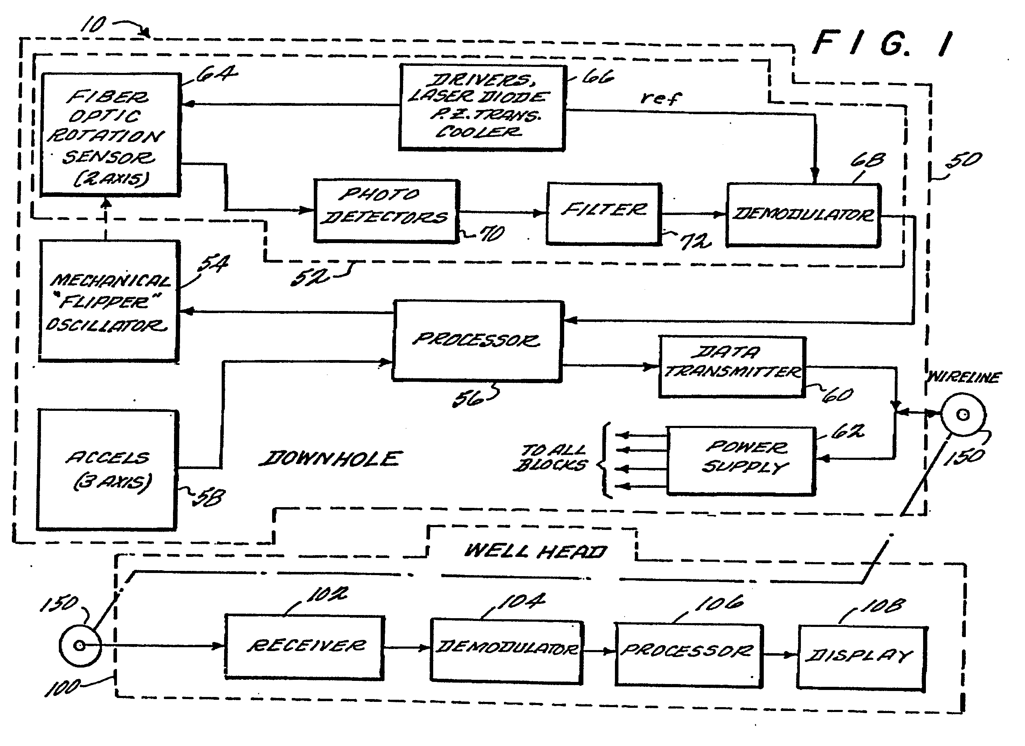

FIGURE 1 is a block diagram of the presently preferred exemplary embodiment of a well direction sensing system 10 in accordance with the present invention. System 10 includes a downhole tool 50 and a surface data acquisition unit 100. Tool 50 is lowered into a borehole 200 on a wire line 150, and communicates signals indicating measurements taken in the borehole to surface unit 100 via the wire line.

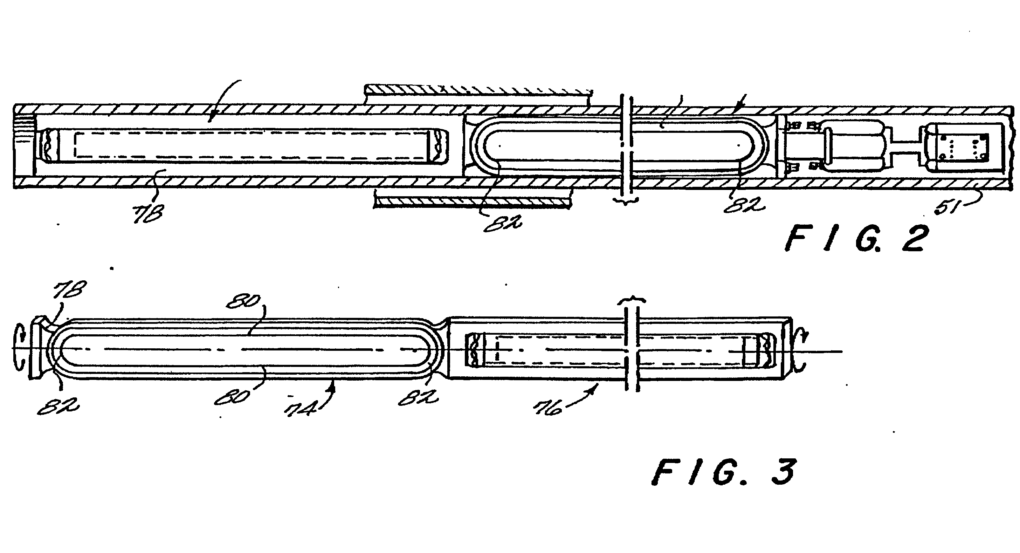

Tool 50 includes an optical rotation sensor ("optical gyro") 52, a mechanical "flipper" oscillator 54, a processor 56, a 3-axis accelerometer 58, a data transmitter 60, and a power supply 62. Optical gyro 52 measures the orientation of two orthogonal axes of a housing 51 (see FIGURE 2) of the tool 50 normal to the housing long axis with respect to the earth's rotational axis and applies the results of the measurements to processor 56. 3-axis accelerometer 58 measures the three orthogonal components of the gravity vector as the tool travels through the borehole 200, and applies the results of the performed measurements to processor 56.

Processor 56 performs analysis and formatting of the information received by it from optical gyro 52 and accelerometer 58. Processor 56 also controls the operation of flipper 54, which mechanically changes the physical position of the optical path of optical gyro 52, as will be explained. Data transmitter 60 receives formatted data from processor 56 representative of the measurements performed by gyro 52 and accelerometer 58, and transmits the data to surface unit 100 via wire line 150.

Gyro 52 measures the attitude of tool 50 with respect to the earth's rotational axis. Gyro 52 includes a fiber optic rotation sensor 64, means for providing laser-generated radiation to sensor 64 (drivers, a super-radiant diode, means for cooling the diode, and a piezoelectric transducer (PZT) are shown in block 66), a demodulator 68, photodetectors 70 and filter 72.

Optical gyro 52 measures rotation with respect to the two axes to which it is sensitive by using the Sagnac Effect in a well-known manner (such as is described in U.S. Patent No. 4,299,490 to Cahill et al issued November 10, 1981). A super-radiant diode (block 66) produces energy and directs the energy to a beamsplitter (part of sensor 64). One part of the beam may reflect onto a photodetector that monitors amplitude fluctuations of the laser output and provides this information to an electronic feedback system (not shown) which acts to normalize the output of gyro 52 as well as regulate the output of the diode. The second portion of the beam is intercepted by another beamsplitter and is split and directed into each end of two fiber optic coils (sensor 64) so that two counterpropagating beams are present in each.

For each of two optical fiber coils of sensor 64 (the configurations of which will be explained in greater detail shortly), the relative path lengths of the counterpropagating beams are changed upon rotation of the coil about an axis normal to the plane in which the coil lies. For example, upon clockwise rotation of the coil, the path length of the beam travelling in a clockwise direction is lengthened while the path length of the counterclockwise beam is shortened.

Consequently, the two beams move out of phase with one another and the phase shift is recorded as an intensity change by photodetector 70 once the two beams are combined by the second beamsplitter.

The intensity change sensed by photodetector 70 is extremely small, and cannot be readily detected by itself. The PZT transducer (positioned at one end of sensor 64) introduces an additional, periodic phase modulation on both of the counter-rotating beams, such that the intensity change sensed by photodetector 70 exhibits a periodic waveform with a fundamental frequency equal to that of the phase modulation. The amplitude of each odd harmonic component of the intensity change waveform is directly proportional to the fiber coil rotation rate.

The photodetector 70 converts the intensity changes it senses into an electrical signal, and filter 70 selects only one of the odd harmonics (the third harmonic in the preferred embodiment) for application to demodulator 68. Demodulator 68 determines the amplitude of the third harmonic signal, which is proportional to rotation of the sensor 64 caused by rotation of tool 50 plus any bias.

Although the preferred embodiment uses a direct-measurement open-loop rotation-rate measurement circuit as described above, it will be understood that a phase-nulling-type closed-loop circuit could be used instead if desired. This type of circuit configuration is described in U.S. Patent No. 4,299,490 to Cahill et al. See also Davis et al, Fiberoptic Sensors Technology Handbook, pages 5-14 through 5-23 (Dynamic Systems). Because the rotation rates to be measured are relatively slow, the response time provided by an open-loop arrangement is sufficient for measuring the rotation rate of tool 50. Nevertheless, it might be desirable, based upon other considerations, to use a closed-loop circuit. In such a closed-loop arrangement, the PZT transducer (contained in block 66) acts as frequency shifter. The PZT transducer is positioned at one end of sensor 64 so that both the clockwise and counterclockwise beams are frequency modulated thereby. The amount of frequency shift introduced by the PZT transducer may be controlled, so that a nonreciprocal phase shift is introduced which offsets any phase shift generated by rotation of sensor 64. The photodetector 70 may determine when the nonreciprocal phase shift nulls the phase shift introduced due to rotation of sensor 64, and the amount of frequency shift required to obtain such a null is a measure of rotation of tool 50.

FIGURE 3 is a side view of sensor 64. Fiber optic rotation sensor 64 includes a first optical fiber coil 74 and a second optical fiber coil 76. Coils 74 and 76 are fixed together on a common mounting frame 78 in positions rotated 90° with respect to one another. Accordingly, the direction of rotation to which coil 74 is sensitive is at right angles to the direction of rotation to which coil 76 is sensitive (each of the coils being sensitive to rotation about an axis normal to the plane in which the coil lies). Thus, in the geometrical relationship of the coils illustrated, gyro 52 can measure rotations of tool 50 about axes perpendicular to the long axis of the tool 50.

As shown in FIGURE 2, because of the relatively small diameter of most boreholes 200. the housing 51 of tool 50 is most conveniently shaped as a cylinder having a relatively small diameter. As is well known, however, the sensitivity of sensor 64 is proportional to the area enclosed by the coils (as well as to the number of turns). In the preferred embodiment, each of coils 74 and 76 is configured in the shape of a "race track" (i.e. each coil has relatively long, parallel extents 80 which are connected by end portions 82 having relatively small radii) so that the coils can physically fit within the housing 51 or tool 50 (and thus within the borehole 200). Coils 74 and 76 are fabricated by wrapping a sufficient length of optical fiber around a suitable form.

The minimum radius of curvature of each of end portions 82 is limited by the properties of the particular optical fiber used. If the radius of curvature of end portions 82 is too small, the fiber will break. Short of breaking, the light-conductive properties of the fiber can be degraded if the radius of curvature of end portions 82 is too small. In particular, fiber microstrain, which can occur when an optical fiber is bent to a very small radius of curvature, can decrease the total internal reflectance of the walls of the fiber, thereby increasing fiber loss. As radius of curvature is decreased further, microcracks in the fiber develop. Each such microcrack will constitute a reflection source within the fiber, causing light within the fiber to be reflected back down the fiber in the direction from whence it came. Hence, there is a minimum acceptable radius of curvature for a given fiber (depending upon the properties of the fiber itself). The radius of curvature of end portions 82 of coils 72 and 74 must exceed this minimum radius.

Each of coils 74 and 76 are mounted onto a common mounting frame 78. Oscillator 54 mechanically selectively rotates frame 78 reciprocally (i.e. back and forth) about an axis which is axial to housing 51 of tool 50 (i.e. about the long axis of the tool). In one mode of operation, oscillator first rotates frame 78 clockwise (with respect to the circumference of the cylindrical tool 50) and subsequently rotates the frame 180° counterclockwise (i.e., in a second direction opposite to the first direction of rotation). The frame 78 remains at an extreme position (i.e. fully clockwise or fully counterclockwise) for a predetermined period of time before being rotated the other way sufficient to permit a measurement to be made at each extreme position.

As mentioned previously, the accuracy of optical gyro 52 may be degraded by measurement bias inherent in the gyro itself. In the preferred embodiment, mechanical flipper oscillator 54 is used as a means for reducing the effects of this inherent bias. Optical gyro 52 introduces a measurement bias which is independent of the orientation of the optical gyro. Thus, any measurement produced by gyro will include a bias term b.

Measurements are performed by optical gyro 52 when coils 74 and 76 are stationary with respect to housing 51 (i.e. rotated fully clockwise or fully counterclockwise by flipper oscillator 54).

Oscillator 54 rotates coils 74 and 76 (suitably at a predetermined desired rate) first in one direction and then in a reverse direction with respect to tool 50. At the extreme clockwise position, a first measurement $x_1$ is taken (for example by coil 74) and stored in processor 56:

$$x_1 = x + b \qquad\qquad (1)$$

(where x is the rotation rate of tool 50 measured by optical gyro 52 and b is the bias introduced by the gyro). At the extreme counterclockwise position, a second measurement $x_2$ is taken (also by coil 74):

$$x_2 = -x + b \quad . \qquad\qquad (2)$$

The "x" term in the second measurement is negative because the orientation of optical gyro 52 at the time of the second measurement is displaced exactly 180° from the orientation of the gyro at the time the first measurement was made. Processor 56 now subtracts the second measurement from the first measurement to obtain a final measurement value $x_F$:

$$
\begin{aligned}
x_F &= x_1 - x_2 & (3a)\\
&= +x + b - (-x + b) & (3b)\\
&= +x + x + b - b & (3c)\\
&= 2x \quad . & (3d)
\end{aligned}
$$

The bias term is thus eliminated from the final measurement value $x_F$. Measurements are taken simultaneously in a similar fashion using coil 76 to obtain information about rotation normal to the plane of coil 76.

Flipper oscillator 54 must rotate optical gyro 52 rapidly relative to the rates of rotation being measured to ensure the "x" factor in equations (1) and (2) above are substantially equal. Flipper oscillator 54 must also be capable of stopping the rotation of optical gyro 52 at positions precisely 180° apart from one another with a high degree of repeatability. These performance criteria are met by most precision stepper motors presently available, especially in view of the relatively slow rates of rotation being measured.

While the angle which oscillator 54 rotates frame 78 is 180° in each direction in one mode of operation of the preferred embodiment, other angles of rotation might be used instead if desired. For example, in another mode of operation of the preferred embodiment, flipper oscillator 54

rotates frame 78 a full 360°, stopping the frame rotation after every 120° of rotation to permit a measurement to be performed. By calculating the final measurement $x_f$ from three measurements taken 120° apart, the effects of both the bias and the first derivative of the inherent bias b introduced by the optical gyro 52 may be eliminated.

Accelerometer 58 determines the intensity of the gravitational field of the earth in each of three orthogonal directions. Accelerometer 58 is needed because optical gyro 52 measures rotation only about an axis perpendicular to the long axis of tool 50 (i.e., the gryro produces information from which tool attitude with respect to the earth's rotational axis can be obtained), but is not capable of measuring the vertical attitude of the tool. Accelerometer 58 is used to produce signals indicating tool vertical attitude.

Processor 56 controls the timing of the operation of flipper oscillator 54, and synchronizes measurements with such timing (so the measurements are performed only during times when frame 78 is stationary). Processor 56 may comprise a conventional single-chip microprocessor integrated circuit having an internal read only memory (ROM) which stores a set of microinstructions to be executed by the processor. Processor 56 also includes internal registers, an internal clock generator, and an internal random access memory (RAM). Processor 56 receives the measurements produced by optical gyro 52 and accelerometer 58 (after any necessary analog-to-digital conversion) at its input data port, and processes this information in accordance with the microinstructions stored by its internal ROM. Processor 56 formats the measurement information and codes it in a form intelligible to surface unit 100. Processor 56 may also perform other conventional processes on the data, such as error correction and the like, if desired. Processor 56 generates a serial data stream representative of the data which it receives, and applies the data stream to data transmitter 60.

Data transmitter 60 converts the data stream output by processor 56 into signals suitable to be transmitted over wire line 150 to surface unit 100. Data transmitter 60 may condition the data signal, modulates the data signal onto a carrier signal (in a conventional manner), and amplifies the modulated signal to a level sufficient to be transmitted to the surface. Power for data transmitter 60 (as well as to the various other blocks of tool 50) is provided by power supply 62 (which may comprise a battery power supply if desired).

Surface data acquisition unit 100 is located at the surface (usually at the wellhead near the opening of borehole 200). Surface unit 100 receives the data transmitted by transmitter 60 over wire line 150, demodulates the received data, processes the data to determine the attitude of tool 50, and displays the determined information. Processor 106 may determine attitude using conventional gyro compassing or other conventional data reduction techniques such as those disclosed in G.W. Uttecht and J.P. deWardt, "Application of Small Diameter Intertial Grade Gyroscopes Significantly Reduces Borehole Position Uncertainty", IADC/SPE 11358, presented at the 1983 International Association of Drilling Contractors/Society of Petroleum Engineers Drilling Conference. Surface unit 100 includes a receiver 102, a demodulator 104, a processor 106 and a display 108. Receiver 102 is a conventional receiver unit which receives the signals transmitted over wire line 150 by transmitter 60. Receiver 102 and transmitter 60 may operate in the radio frequency range if desired (of course, any suitable means to transmit information from tool 50 to surface unit 100 could be used). Demodulator 104 demodulates the signal produced by receiver 102 such that the output of the demodulator is a replica of the data output stream of processor 56 of tool 50. The output of demodulator 104 is applied to the input of processor 106 (after appropriate signal conditioning and conversion, if necessary).

Processor 106 converts the serial data stream into parallel format, and performs analysis on the converted data in a conventional manner. For instance, processor 106 analyzes the data representative of outputs for each of the three axes of accelerometer 58 to determine the attitude with respect to the earth's gravitational field. Likewise, processor 106 analyzes the data representative of the output of gyro 52 and determines the azimuth of tool 50 (and thus the direction of the borehole) from the rate of rotation of tool 50 indicated by the gyro output. Alternatively, processor 106 into a human-intelligible form, and the data could be stored (such as on a non-volatile memory device or as printed copy on a chart recorder or the like) to be analyzed later. Processor 106 delivers its output to a conventional display device, which produces a display for interpretation by a user. Processor 56 may comprise a conventional microprocessor, minicomputer, microcomputer, etc. executing software entirely conventional in content and function.

Although this invention has been explained with reference to only a few exemplary embodiments, those skilled in the art will appreciate that many modifications to these embodiments are possible without departing from the novel and advantageous features of this invention as defined in the appended claims.

## Claims

1. An apparatus for measuring the direction of a subterranean borehole comprising:

a housing adapted to travel within a subterranean borehole;

an optical rotation sensor for producing a first signal indicative of the attitude of said housing with respect to the rotational axis of the earth; and

means for transmitting said first signal to the surface.

2. An apparatus as in claim 1 wherein:

said apparatus further comprises accelerometer means for producing a second signal indicating the attitude of said housing with respect to terrestrial gravitation forces; and

said transmitting means also transmits said second signal to the surface.

3. An apparatus as in claim 1 wherein said optical rotation sensor includes:

light source means for producing first and second light beams;

optical fiber means, coupled to said light source means, for counterpropagating said first and second light beams produced by said light source means in different directions along a path; and

means for sensing rotation of said housing about at least one predetermined axis in response to a shift in phase of said first counterpropagating beam with respect to said second counterpropagating beam.

4. An apparatus as in claim 3 wherein said optical fiber means includes:

a frame; and

first and second optical fiber coils fixedly disposed on said frame, the plane of said first coil fixed in a position rotated by a predetermined angle with respect to the plane of said second coil.

5. An apparatus as in claim 1 wherein said optical rotation sensor means includes:

a frame; and

first and second optical fiber coils fixedly disposed on said frame, said plane of said first coil fixed in a position rotated by a predetermined angle with respect to the plane of said second coil.

6. An apparatus as in claim 1 further including flipper means, operatively coupled to said optical rotation sensor, for eliminating measurement bias from said signal indicative of attitude.

7. An apparatus as in claim 6 wherein said flipper means includes means for rotating said rotation sensor between plural positions fixed with respect to said housing.

8. An apparatus as in claim 7 wherein said plural positions comprise three discrete positions spaced 120° apart.

F I G. 2

F I G. 3